# EUROPEAN PATENT APPLICATION

(11) **EP 4 679 654 A1**
(43) Date of publication of application: **14.01.2026**
(21) Application number: 23926819.6
(22) Date of filing: 16.03.2023
(51) Int. Cl.: H02H 9/04

(54) **PROTECTION CIRCUIT FOR BATTERY MANAGEMENT CHIP**

(71) Applicant: Zhejiang Zeekr Intelligent Technology Co., Ltd, Ningbo, Zhejiang 315899 (CN); Viridi Energy Mobility Technology (Ningbo) Co., Ltd., Ningbo, Zhejiang 315336 (CN); Zhejiang Geely Holding Group Co., Ltd., Hangzhou, Zhejiang 310051 (CN)
(72) Inventor: XU, Yeqiang, Ningbo, Zhejiang 315899 (CN); LI, Xin, Ningbo, Zhejiang 315899 (CN); CHEN, Deting, Ningbo, Zhejiang 315899 (CN); LIU, Gang, Ningbo, Zhejiang 315899 (CN); DENG, Guijiang, Ningbo, Zhejiang 315899 (CN); SUN, Tao, Ningbo, Zhejiang 315899 (CN); LIU, Xianghua, Ningbo, Zhejiang 315899 (CN); CHEN, Xiao, Ningbo, Zhejiang 315899 (CN); WANG, Yuheng, Ningbo, Zhejiang 315899 (CN); NIU, Yaqi, Ningbo, Zhejiang 315899 (CN)
(74) Representative: Michalski Hüttermann & Partner Patentanwälte mbB
(86) International application number: PCT/CN2023/081966
(87) International publication number: WO 2024/187467

(57) **Abstract**

A protection circuit for a battery management chip. The battery management chip includes a first number of cell voltage sense inputs. The protection circuit includes: a plurality of transient voltage suppressors (TVSs), where a cathode of each TVS is connected to a cell corresponding to a last cell voltage sense input in each group of cell voltage sense inputs, and an anode of each TVS is connected to a cell corresponding to a first cell voltage sense input in the battery management chip, where each group of cell voltage sense inputs includes a same number of TVSs, and cell voltage sense inputs in each group of cell voltage sense inputs have a same withstand voltage value. Staged protection for the first number of cell voltage sense inputs in the battery management chip is achieved, a surge voltage that exceeds a withstand voltage value of a middle cell voltage sense input is avoided during surge limitation on the last cell voltage sense input, the reliability of the battery management chip is improved, and the service life of the battery management chip is prolonged.

## Description

### TECHNICAL FIELD

The present disclosure relates to the field of circuit technologies, and in particular, to a protection circuit for a battery management chip.

### BACKGROUND

At present, a battery management chip usually monitors a working state of a battery by obtaining a current of a battery cell. However, during a working process of the battery, a surge phenomenon caused by intense pulses may damage the battery management chip. For example, an analog front-end chip for detecting a battery cell system in an electric vehicle is easily damaged by sudden surge voltage and surge current during a process of obtaining the current of the cell, which affects the reliability and service life of the chip.

### SUMMARY

In view of this, the present disclosure provides a protection circuit for a battery management chip to at least solve the technical problems in the related art.

The present disclosure provides a protection circuit for a battery management chip, where the battery management chip includes a first number of cell voltage sense inputs, and the protection circuit includes:
a plurality of transient voltage suppressors (TVSs), where each of the TVSs includes a cathode connected to a cell corresponding to a last cell voltage sense input in a respective one of a plurality of groups of cell voltage sense inputs, and an anode connected to a cell corresponding to a first cell voltage sense input in the battery management chip;
where each of the groups of cell voltage sense inputs includes a same number of TVSs, and cell voltage sense inputs in each of the groups of cell voltage sense inputs have a same withstand voltage value.

In combination with any embodiment of the present disclosure, the protection circuit further includes:
a low-pass filter, disposed between every two adjacent cell voltage sense inputs in the battery management chip;
where the low-pass filter includes a protective capacitor and a protective resistor.

In combination with any embodiment of the present disclosure, the battery management chip further includes the first number of cell balance connections, and the protection circuit further includes:
a voltage-regulator diode, disposed between every two adjacent cell balance connections in the battery management chip;
where the voltage-regulator diode has a clamping voltage determined according to a withstand voltage value between adjacent cell balance connections.

In combination with any embodiment of the present disclosure, the battery management chip includes an analog front-end chip BQ79718, the analog front-end chip BQ79718 includes cell voltage sense inputs 0 to 18, where the cell voltage sense inputs 1 to 6 have a first withstand voltage value, the cell voltage sense inputs 7 to 12 have a second withstand voltage value, and the cell voltage sense inputs 13 to 18 have a third withstand voltage value, and the protection circuit includes:
three transient voltage suppressors (TVSs), where
a first TVS includes a cathode connected to a cell corresponding to the cell voltage sense input 6, and an anode connected to a cell corresponding to the cell voltage sense input 0;
a second TVS includes a cathode connected to a cell corresponding to the cell voltage sense input 12, and an anode connected to the cell corresponding to the cell voltage sense input 0; and
a third TVS includes a cathode connected to a cell corresponding to the cell voltage sense input 18, and an anode connected to the cell corresponding to the cell voltage sense input 0.

In combination with any embodiment of the present disclosure, the cell voltage sense inputs 1 to 18 are respectively connected to positive electrodes 1 to 18 of cells, and the cell voltage sense input 0 is connected to a negative electrode of a cell.

The protection circuit provided by the embodiments of the present disclosure may have the following beneficial effects.

In the protection circuit of the present disclosure, the TVS is disposed between the last cell voltage sense input in each group of cell voltage sense inputs with the same withstand voltage value and the first cell voltage sense input in the battery management chip. In this way, staged protection for the first number of cell voltage sense inputs in the battery management chip is achieved, a surge voltage that exceeds the withstand voltage value of a middle cell voltage sense input is avoided during surge limitation on the last cell voltage sense input, the reliability of the battery management chip is improved, and the service life of the battery management chip is prolonged.

It is to be understood that both the foregoing general description and the following detailed description are exemplary and explanatory only, and are not restrictive of the present disclosure.

### BRIEF DESCRIPTION OF DRAWINGS

The drawings herein, which are incorporated into and constitute a part of this specification, illustrate embodiments consistent with the present disclosure and are used in conjunction with the specification to explain the principles of the present disclosure.
FIG. 1 illustrates a schematic diagram of a protection circuit according to an exemplary embodiment of the present disclosure.
FIG. 2 illustrates a schematic diagram of another protection circuit according to an exemplary embodiment of the present disclosure.
FIG. 3 illustrates a schematic diagram of another protection circuit according to an exemplary embodiment of the present disclosure.
FIG. 4 illustrates a schematic diagram of another protection circuit according to an exemplary embodiment of the present disclosure.
FIG. 5 illustrates a schematic diagram of another protection circuit according to an exemplary embodiment of the present disclosure.
FIG. 6 illustrates a schematic diagram of another protection circuit according to an exemplary embodiment of the present disclosure.

### DETAILED DESCRIPTION

Reference will now be made in detail to exemplary embodiments, examples of which are illustrated in the accompanying drawings. When the following description refers to the drawings, the same reference numerals in different drawings indicate the same or similar elements, unless otherwise specified. Implementations set forth in the following exemplary embodiments do not represent all implementations consistent with the present disclosure. Instead, they are merely examples of apparatuses and methods consistent with some aspects of the present disclosure as detailed in the appended claims.

Terminology used herein is for the purpose of describing particular embodiments only, and is not intended to be limiting of the present disclosure. The singular forms "a", "said" and "the" used in the present disclosure and the appended claims are also intended to include plural forms, unless the context clearly indicates otherwise. It should also be understood that the term "and/or" as used herein refers to and encompasses any or all possible combinations of one or more of the associated listed items.

It should be understood that although the terms first, second, third, etc. may be used in the present disclosure to describe various information, the information should not be limited to these terms. These terms are only used to distinguish the same type of information from each other. For example, without departing from the scope of the present disclosure, first information may also be referred to as second information, and similarly, second information may also be referred to as first information. Depending on the context, the word "if" as used herein may be interpreted as "upon" or "when" or "in response to determining".

At present, a battery management chip usually monitors a working state of a battery by obtaining a current of a battery cell. However, during a working process of the battery, a surge phenomenon caused by intense pulses may damage the battery management chip. For example, an analog front-end chip for detecting a battery cell system in an electric vehicle is easily damaged by sudden surge voltage and surge current during a process of obtaining the current of the cell, which affects the reliability and service life of the chip.

Currently, surge protection for the battery management chip is usually implemented by adding a transient voltage suppressor (TVS) between a first pin and a last pin of the battery management chip. However, due to the large difference in withstand voltage values among different pins in the battery management chip, a surge voltage exceeding a withstand voltage value of a middle pin may still be generated during surge limitation on the last pin, causing damage to the battery management chip.

In view of this, the present disclosure provides a protection circuit for a battery management chip to at least solve the technical problems in the related art.

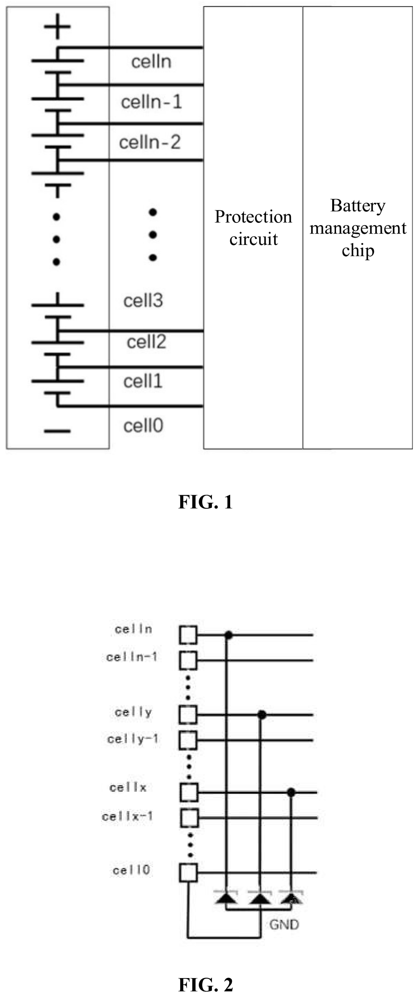

FIG. 1 illustrates a schematic diagram of a protection circuit according to an exemplary embodiment of the present disclosure. As shown in FIG. 1, the protection circuit may be disposed between cells (e.g., cell0 to celln) and a battery management chip, and the battery management chip includes a first number of cell voltage sense inputs (e.g., VC0 to VCn as shown in the figures, "cell voltage sense input" herein is also referred to as "sampling pin"). The protection circuit includes:
a plurality of transient voltage suppressors (TVSs), where each of the TVSs includes a cathode connected to a cell corresponding to a last cell voltage sense input in a respective one of a plurality of groups of cell voltage sense inputs, and an anode connected to a cell corresponding to a first cell voltage sense input in the battery management chip, where each group of cell voltage sense inputs includes a same number of TVSs, and cell voltage sense inputs in each group of cell voltage sense inputs have a same withstand voltage value.

For example, the TVS is an electronic component with characteristics such as low breakdown voltage, fast instantaneous response, and good reusability. After the TVS is added between the cell voltage sense inputs, when an external voltage changes rapidly (for example, a surge occurs), the TVS can share an excessively high voltage to a ground line or a power line in a short time, so as to protect the battery management chip from a high voltage impact. Due to the large difference in withstand voltage values among different cell voltage sense inputs in the battery management chip, the TVS may be disposed between a cell corresponding to a last cell voltage sense input in each group of cell voltage sense inputs with a same withstand voltage value and a cell corresponding to a first cell voltage sense input in the battery management chip. In this way, staged protection for the first number of cell voltage sense inputs in the battery management chip is achieved, and a surge voltage that exceeds a withstand voltage value of a middle cell voltage sense input is avoided during surge limitation on the last cell voltage sense input.

In particular, FIG. 2 illustrates a schematic diagram of another protection circuit according to an exemplary embodiment of the present disclosure.

As shown in FIG. 2, in the battery management chip, the first number of cell voltage sense inputs may be divided into three groups of cell voltage sense inputs based on different withstand voltage values, where a withstand voltage value of a first group of cell voltage sense inputs is greater than a withstand voltage value of a second group of cell voltage sense inputs, and the withstand voltage value of the second group of cell voltage sense inputs is greater than a withstand voltage value of a third group of cell voltage sense inputs.

For the foregoing example, the protection circuit may include three TVSs, cathodes of which are connected to cells (cellx, celly, and celln) corresponding to last cell voltage sense inputs in the three groups of cell voltage sense inputs, respectively, and anodes of which are connected to a cell cell0 corresponding to a first cell voltage sense input in the battery management chip.

In response to the battery management chip receiving the surge, the first TVS may filter the surge voltage to be below the withstand voltage value of the first group of cell voltage sense inputs. Then, the second TVS may filter the surge voltage to be below the withstand voltage value of the second group of cell voltage sense inputs. And, the third TVS may filter the surge voltage to be below the withstand voltage value of the third group of cell voltage sense inputs. In this way, staged protection for the first number of cell voltage sense inputs in the battery management chip is achieved, and a surge voltage that exceeds a withstand voltage value of a middle cell voltage sense input is avoided during surge limitation on the last cell voltage sense input.

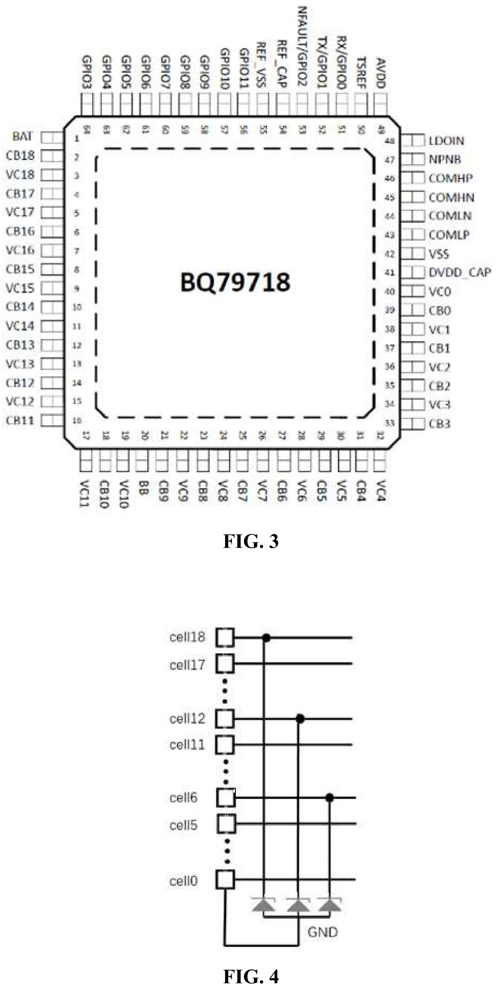

FIG. 3 illustrates a schematic diagram of another battery management chip according to an exemplary embodiment of the present disclosure.

As shown in FIG. 3, the battery management chip includes an analog front-end chip BQ79718. The analog front-end chip BQ79718 includes cell voltage sense inputs 0 to 18 (VC0 to VC18), where VC1 to VC 6 have a first withstand voltage value (40V), VC 7 to VC 12 have a second withstand voltage value (85V), and VC 13 to VC 18 have a third withstand voltage value (108V).

Preferably, the VC 1 to the VC 18 are respectively connected to positive electrodes cell1 to cell18 of the cells, and the VC 0 is connected to a negative electrode cell0 of the cell.

In particular, the analog front-end chip is a chip specially used for acquiring and processing interface signals. The analog front-end chip is commonly used to convert analog signals from a sensor into digital signals for further processing by a digital processor, such as a microcontroller. The analog front-end chip can complete functions such as signal amplification, filtering, sampling, and anti-interference, and is an important component in a digital signal processing system.

The BQ79718, as a high-performance analog front-end chip integrating battery protection and fuel gauge, is mainly used for battery management systems in applications such as electric vehicles, industrial equipment, and energy storage systems. The BQ79718 integrates a plurality of functions such as battery protection, fuel gauge, and voltage/current sampling, supports a plurality of communications interfaces, and has high reliability. However, the BQ79718 is easily damaged by sudden surge voltage and surge current from the vehicle battery during a process of obtaining the current of the battery cell in the electric vehicle, which affects the reliability and service life of the battery management chip.

FIG. 4 illustrates a schematic diagram of another protection circuit according to an exemplary embodiment of the present disclosure.

As shown in FIG. 4, in the battery management chip, the cell voltage sense inputs 0 to 18 may be divided into three groups of cell voltage sense inputs based on different withstand voltage values. For the above example, the protection circuit may include three TVSs.

A first TVS includes a cathode connected to the cell cell6 corresponding to the cell voltage sense input 6, and an anode connected to the cell cell0 corresponding to the cell voltage sense input 0.

A second TVS includes a cathode connected to the cell cell12 corresponding to the cell voltage sense input 12, and an anode connected to the cell cell0 corresponding to the cell voltage sense input 0.

A third TVS includes a cathode connected to the cell cell18 corresponding to the cell voltage sense input 18, and an anode connected to the cell cell0 corresponding to the cell voltage sense input 0.

In response to the battery management chip receiving the surge, the first TVS may filter the surge voltage to be below 108V, the second TVS may filter the surge voltage to be below 85 V, and the third TVS may filter the surge voltage to be below 40 V. In this way, staged protection for the cell voltage sense inputs 0 to 18 in the battery management chip is achieved, and a surge voltage that exceeds a withstand voltage value of a middle cell voltage sense input is avoided during surge limitation on the last cell voltage sense input.

In the protection circuit of the present disclosure, the TVS is disposed between the last cell voltage sense input in each group of cell voltage sense inputs with the same withstand voltage value and the first cell voltage sense input in the battery management chip, so that staged protection for the first number of cell voltage sense inputs in the battery management chip is realized, the surge voltage exceeding the withstand voltage value of the middle cell voltage sense input is avoided during the surge limitation on the last cell voltage sense input, and the reliability and service life of the battery management chip are improved.

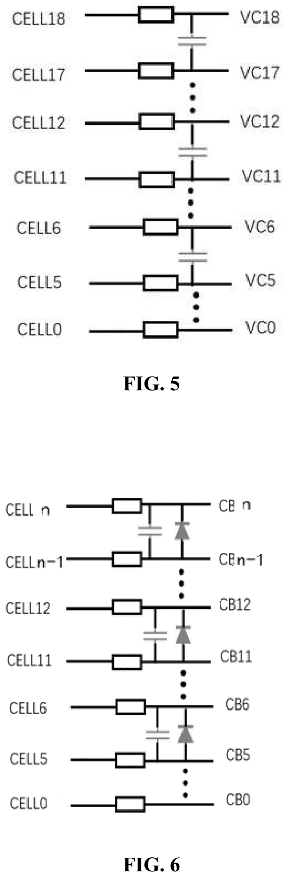

FIG. 5 illustrates a schematic diagram of another protection circuit according to an exemplary embodiment of the present disclosure.

As shown in FIG. 5, the protection circuit further includes a low-pass filter disposed between every two adjacent cell voltage sense inputs in the battery management chip, where the low-pass filter includes a protective capacitor and a protective resistor.

For example, the low-pass filter may perform filtering processing on the surge voltage.

The low-pass filter composed of a protective resistor and a protective capacitor (such as a differential mode capacitor) in front of the cell voltage sense input can filter out high-frequency signals, and only retain low-frequency signals, that is, enable filtering of surge voltages.

The protective capacitor can share the surge voltage, to avoid damage to the cell voltage sense input due to an excessive voltage. The protective resistor can limit the magnitude of the surge current in the presence of a large surge current in an input signal in front of the cell voltage sense input, thereby preventing damage to the cell voltage sense input due to an excessive current.

According to the protection circuit of the present disclosure, by adding a low-pass filter composed of a resistor and a capacitor in front of the cell voltage sense input, the effect of filtering the signal and filtering the spike voltage is realized, the surge voltage exceeding the withstand voltage value of the cell voltage sense input is avoided between adjacent cell voltage sense inputs, and the reliability and service life of the battery management chip are further improved.

FIG. 6 illustrates a schematic diagram of another protection circuit according to an exemplary embodiment of the present disclosure.

As shown in FIG. 6, the battery management chip further includes the first number of cell balance connections (e.g., CB0 to CBn as shown in FIG. 6, "cell balance connection" herein is also referred to as "balance pin"), and the protection circuit further includes:
a voltage-regulator diode (such as a differential mode Zener diode) disposed between every two adjacent cell balance connections in the battery management chip;
where the voltage-regulator diode has a clamping voltage determined according to a withstand voltage value between adjacent cell balance connections.

The voltage-regulator diode can enter a reverse breakdown state when a reverse voltage exceeds a rated breakdown voltage of the voltage-regulator diode to stabilize the voltage at a rated value, and function as a voltage stabilizer for limiting a pulse voltage difference between the cell balance connections.

Taking the analog front-end chip BQ79718 as an example, a highest withstand voltage value between adjacent cell balance connections is 12 V. When the clamping voltage of the voltage-regulator diode is set to 12V, the voltage-regulator diode disposed between every two adjacent cell balance connections in the battery management chip can prevent the battery management chip from being damaged due to an excessively high voltage difference between the cell balance connections, thereby further improving the reliability and service life of the battery management chip.

Other embodiments of the present disclosure will be apparent to those of skill in the art from consideration of the specification and practice of the disclosure disclosed herein. The present disclosure is intended to cover any variations, uses, or adaptations of the present disclosure that follow the general principles thereof and include common knowledge or conventional technical means in the art that are not disclosed in the present disclosure. It is intended that the specification and embodiments be considered as exemplary only, with a true scope and spirit of the present disclosure being indicated by the following claims.

It should be understood that the present disclosure is not limited to the precise structures described above and shown in the accompanying drawings, and various modifications and changes may be made without departing from the scope thereof. The scope of the present disclosure is limited only by the appended claims.

## Claims

1. A protection circuit for a battery management chip, wherein the battery management chip comprises a first number of cell voltage sense inputs, and the protection circuit comprises:
a plurality of transient voltage suppressors (TVSs), wherein each of the TVSs comprises a cathode connected to a cell corresponding to a last cell voltage sense input in a respective one of a plurality of groups of cell voltage sense inputs, and an anode connected to a cell corresponding to a first cell voltage sense input in the battery management chip,
wherein each of the groups of cell voltage sense inputs comprises a same number of TVSs, and cell voltage sense inputs in each of the groups of cell voltage sense inputs have a same withstand voltage value.

2. The protection circuit according to claim 1, further comprising:
a low-pass filter, disposed between every two adjacent cell voltage sense inputs in the battery management chip,
wherein the low-pass filter comprises a protective capacitor and a protective resistor.

3. The protection circuit according to claim 1, wherein the battery management chip further comprises the first number of cell balance connections, and the protection circuit further comprises:
a voltage-regulator diode, disposed between every two adjacent cell balance connections in the battery management chip,
wherein the voltage-regulator diode has a clamping voltage determined according to a withstand voltage value between adjacent cell balance connections.

4. The protection circuit according to claim 1, wherein the battery management chip comprises an analog front-end chip BQ79718, the analog front-end chip BQ79718 comprising cell voltage sense inputs 0 to 18, wherein the cell voltage sense inputs 1 to 6 have a first withstand voltage value, the cell voltage sense inputs 7 to 12 have a second withstand voltage value, and the cell voltage sense inputs 13 to 18 have a third withstand voltage value, and the protection circuit comprises:
three transient voltage suppressors (TVSs), wherein
a first TVS comprises a cathode connected to a cell corresponding to the cell voltage sense input 6, and an anode connected to a cell corresponding to the cell voltage sense input 0;
a second TVS comprises a cathode connected to a cell corresponding to the cell voltage sense input 12, and an anode connected to the cell corresponding to the cell voltage sense input 0; and
a third TVS comprises a cathode connected to a cell corresponding to the cell voltage sense input 18, and an anode connected to the cell corresponding to the cell voltage sense input 0.

5. The protection circuit according to claim 4, wherein the cell voltage sense inputs 1 to 18 are respectively connected to positive electrodes 1 to 18 of cells, and the cell voltage sense input 0 is connected to a negative electrode of a cell.
